# FASCICULE DE BREVET EUROPEEN

(11) **EP 3 681 746 B1**
(45) Date de publication et mention de la délivrance du brevet: **06.10.2021**
(21) Numéro de dépôt: 18785413.8
(22) Date de dépôt: 02.08.2018
(51) Int. Cl.: B60J 10/33, B60J 10/75

(54) **PROFILÉ LÉCHEUR DE VITRE AVEC MONTAGE FACILITÉ**
FENSTERDICHTUNGSBAND MIT EINFACHER MONTAGE
WINDOWS SEALING STRIP WITH EASE OF MOUNTING

(30) Priorité: 15.09.2017 FR 1758593
(43) Date de publication de la demande: 22.07.2020
(73) Titulaire: PSA Automobiles SA, 78300 Poissy (FR)
(72) Inventeur: HASNAOUI, Farid, 90400 Trevenans (FR); HASNAOU, Amar, 90700 Chatenois-les-forges (FR)
(86) Numéro de dépôt international: PCT/FR2018/051998
(87) Numéro de publication internationale: WO 2019/053347

(56) Documents cités:
- FR-A- 1 161 142
- FR-A1- 2 959 700
- US-A- 2 942 309
- US-A- 4 894 968
- US-A- 5 353 549
- US-A- 5 741 573
- US-A1- 2013 305 611

## Description

L'invention a trait au domaine des véhicules automobiles, plus particulièrement aux profilés d'étanchéité lécheurs extérieurs de porte de véhicule automobile.

Un profilé d'étanchéité lécheur extérieur est destiné à être monté sur un panneau extérieur de porte de véhicule automobile. Ce profilé comprend une fente chaussant un bord supérieur du panneau extérieur de porte, et une lèvre s'appuyant sur la vitre de la porte, ladite lèvre limitant la pénétration d'eau et de poussières dans la porte. Le document de brevet publié EP 1 755 911 B1 divulgue un profilé d'étanchéité lécheur extérieur comprenant un corps en forme de U monté sur un panneau extérieur de porte de véhicule automobile. Ce profilé comprend une fente chaussant le bord supérieur du panneau extérieur de porte. Une des deux faces opposées de cette fente présente des lamelles longitudinales inclinées d'accrochage avec le bord supérieur. La réalisation de ces lamelles peut cependant présenter des difficultés et, partant, un surcoût de production, notamment lorsqu'elles sont réalisées dans un autre matériau que celui du corps formant la face sur laquelle elles sont prévues. Par ailleurs, le serrage et la retenue produits par ces lamelles peuvent s'avérer insuffisants.

Le document de brevet publié FR 2 943 280 A1 divulgue également un profilé d'étanchéité lécheur extérieur positionné sur le bord supérieur d'un panneau de porte d'un véhicule automobile. Le bord supérieur a la particularité d'être replié à 180° autour d'un bord de raidisseur disposé sur la face intérieure du panneau, le raidisseur comprenant des ouvertures espacées régulièrement. Ces ouvertures servent à faciliter l'accrochage de pattes de fixation positionnées sur les faces internes du corps du profilé, améliorant ainsi la tenue dudit profilé sur le bord supérieur. Ce système de fixation est intéressant en ce que la fixation est bonne, cependant, le montage du profilé requiert un soin particulier afin d'engager chacune des pattes dans les ouvertures. Par ailleurs, le fait que le bord supérieur du panneau de porte soit replié autour de celui du raidisseur présente l'avantage de présenter une surface arrondie et non-saillante pour l'intérieur de la fente chaussant ledit bord. La réalisation d'un tel pliage impose cependant des étapes supplémentaires générant un surcoût.

Le document FR 1161142 A divulgue également un profilé d'étanchéité de l'état de l'art.

L'invention a pour objectif de pallier au moins un des inconvénients de l'état de la technique susmentionné. Plus particulièrement, l'invention a pour objectif de proposer un montage d'un profilé d'étanchéité lécheur de vitre sur un panneau extérieur de porte, qui soit robuste, économique et facile à mettre en œuvre, notamment sur des bords de panneaux de porte potentiellement saillants.

L'invention a pour objet un profilé d'étanchéité destiné à être monté sur un bord supérieur d'un panneau extérieur de porte pourvue d'une vitre, ledit profilé comprenant : un corps formant une fente avec deux faces opposées, apte à chausser le bord supérieur ; une lèvre s'étendant le long du corps, destinée à contacter la vitre ; remarquable en ce qu'au moins une des deux faces opposées de la fente comprend des arêtes s'étendant transversalement au profilé et présentant, chacune, une face d'extrémité extérieure à la fente, avec un profil formant un angle moyen (a, β) compris entre 10° et 30° avec une direction principale de ladite fente de manière à favoriser l'insertion du bord dans la fente.

Avantageusement, un raidisseur peut être positionné sur la face arrière du panneau extérieur, au niveau du bord supérieur.

Les arêtes s'étendent avantageusement perpendiculairement au profilé.

Selon un mode avantageux de l'invention, les arêtes présentent, chacune, une section transversale en forme de demi-cercle et sont réparties de manière homogène le long du profilé. Les arêtes présentent avantageusement une forme de godron.

Selon l'invention, une des deux faces opposées de la fente est une face interne située du côté de la lèvre, ladite face comprenant, en outre, au moins un bossage présentant une section triangulaire s'étendant longitudinalement de manière à former une face inclinée de glissement le long du bord supérieur, le bossage formant un clip apte à engager avec un orifice correspondant dans le bord supérieur.

Selon un mode avantageux de l'invention, le ou chacun des bossages comprend, en outre une face de retenue avec l'orifice correspondant du bord supérieur, et deux faces d'extrémité, la face inclinée de glissement formant avec lesdites faces d'extrémités deux bords, au moins un desdits bords présentant un chanfrein d'au moins 2 x 2mm. Ces deux valeurs sont les distances en millimètre entre chacune des deux nouvelles arêtes créées par le chanfrein et l'arête théorique que celui-ci supprime. Avantageusement, le ou les bords présentant le chanfrein sont ceux situés d'un même côté correspondant aux bords qui entrent en contact avec le bord supérieur lors du montage progressif par flexion du profilé.

Selon un mode avantageux de l'invention, le ou chacun des bossages comprend, sur la face inclinée de glissement, une pièce métallique apte à diminuer l'accroche du bossage sur le bord supérieur lors de la mise en place du profilé sur le bord supérieur.

Avantageusement, la pièce métallique est un insert mis en place au cours du moulage du profilé, ou une agrafe fixée sur le bossage après le moulage. L'agrafe est préférentiellement fixée sur le profilé depuis une extrémité inférieure du clip.

Selon l'invention, la portion du corps formant la face interne de la fente est une paroi avec des échancrures transversales de part et d'autre de chaque bossage de manière à permettre une flexion de ladite paroi au niveau de ladite face entre lesdites échancrures lors de la mise en place du profilé sur le bord supérieur. Les échancrures sont traversantes, c'est-à-dire qu'elles sont sur la totalité de l'épaisseur de la paroi.

Avantageusement, les clips sont disposés exclusivement aux extrémités du profilé, par exemple sur des portions d'extrémité du profilé correspondant, chacune, à un quart de la longueur dudit profilé.

Selon un mode avantageux de l'invention, les échancrures s'étendent depuis un bord extérieur de la face interne vers le fond de la fente jusqu'à une distance dudit fond comprise entre 0 et 10mm. Cette distance est avantageusement comprise entre 0 et 5mm.

Selon un mode avantageux de l'invention, la paroi formant la face interne de la fente présente au moins un ajour entre deux échancrures de part et d'autre du ou d'au moins un des bossages.

Selon un mode avantageux de l'invention, le ou les ajours s'étendent longitudinalement en alignement avec les fonds des échancrures. Par alignement entre les ajours et les fonds des échancrures on entend que les ajours présentent un axe longitudinal qui est aligné avec les fonds des échancrures directement adjacentes.

Avantageusement, la paroi formant la face interne de la fente présente une hauteur réduite au niveau du ou des clips. La hauteur réduite de la paroi peut être inférieure à 80% et/ou supérieure à 50% de la hauteur maximale de la paroi.

Avantageusement, le profilé comprend au moins une surface de fermeture de la fente à une extrémité du profilé destinée à servir de butée de positionnement du profilé lors du montage.

L'invention a également pour objet un véhicule automobile comprenant au moins une porte, ladite porte comportant : une vitre mobile ; un panneau extérieur ; un profilé d'étanchéité avec la vitre montée sur un bord supérieur du panneau extérieur ; remarquable en ce que le profilé d'étanchéité est selon l'invention.

Avantageusement, la portion du corps du profilé d'étanchéité formant la face externe du profilé comprend une extrémité supérieure et une extrémité inférieure. Depuis ladite extrémité inférieure s'étendent deux lèvres inférieures et une baguette externe, les deux lèvres inférieures étant en contact avec le panneau extérieur de la porte. La baguette externe, en revanche, forme dans sa partie supérieure un crochet qui s'insère entre la lèvre et l'extrémité supérieure de la portion du corps. Cette baguette externe est préférentiellement fabriquée dans un matériau différent du matériau du profilé, tel que du chrome. Avantageusement, le profilé est réalisé dans des matériaux thermoplastiques.

Avantageusement, le montage du profilé sur le bord supérieur se déroule selon les étapes suivantes : orientation du profilé à environ 30° par rapport au bord supérieur du panneau extérieur de la porte, la surface de fermeture du profilé étant positionnée en butée contre une butée respective dudit panneau, puis déroulage du profilé par flexion sur le bord supérieur du panneau.

Les mesures de l'invention sont intéressantes en ce qu'elles permettent de faciliter le montage du profilé d'étanchéité extérieur sur le panneau extérieur de porte du véhicule. L'invention permet également d'améliorer la souplesse du profilé, et ainsi d'augmenter la rapidité de montage. Elle permet également de parfaire le visuel du profilé par la présence d'une baguette externe positionnée à l'avant du profilé qui va améliorer son esthétique. Les échancrures permettent à la fois d'avoir de la souplesse en flexion dans le profilé afin d'en faciliter le montage, et d'avoir une bonne fixation après montage. Enfin, l'invention permet d'obtenir un profilé d'étanchéité qui soit robuste, économique et facile à mettre en œuvre.

D'autres caractéristiques et avantages de la présente invention seront mieux compris à l'aide de la description et des dessins parmi lesquels :
- la figure 1 est une vue latérale d'un véhicule automobile avec deux profilés d'étanchéité selon l'invention ;
- la figure 2 est une vue en coupe transversale du profilé d'étanchéité selon l'invention au niveau d'arêtes de serrage ;
- la figure 3 est une section du profilé d'étanchéité selon l'invention au niveau d'un bossage ;
- la figure 4 est une vue arrière des deux profilés d'étanchéité montés sur deux bords supérieurs de panneaux extérieurs de porte, tels qu'à la figure 1, selon l'invention ;
- la figure 5 est une vue de la face interne de la fente du profilé d'étanchéité selon l'invention ;
- la figure 6 est une vue de la face interne de la fente du profilé montrant l'intégration d'un insert métallique sur le bossage ;
- la figure 7A est une section transversale d'une agrafe métallique ;
- la figure 7B est une vue de la face interne du profil d'étanchéité, montrant la fixation de l'agrafe de la figure 7A sur le bossage.

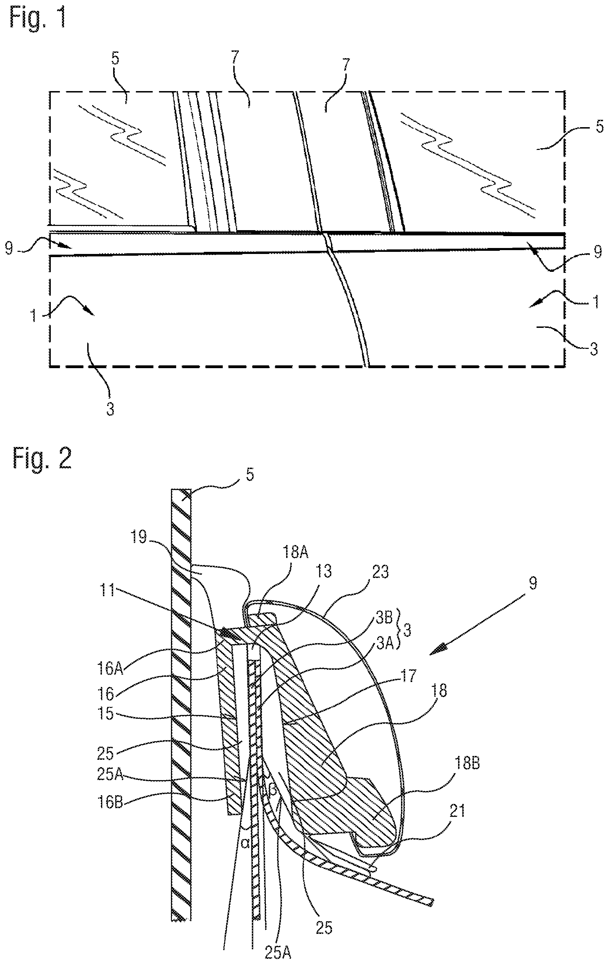

La figure 1 est une vue latérale d'un véhicule automobile avec des profilés d'étanchéité selon l'invention. Le véhicule comprend deux portes 1 avant et arrière. Chaque porte 1 comprend un panneau extérieur 3, une vitre 5 pouvant coulisser le long du panneau 3, et une garniture 7. Ce panneau extérieur 3 comprend un bord supérieur sur lequel est monté le profilé d'étanchéité 9 selon l'invention, couramment appelé lécheur de vitre.

La figure 2 est une vue en coupe du profilé d'étanchéité selon l'invention, le profilé étant monté sur le bord supérieur du panneau extérieur de porte. Un raidisseur 3B peut être disposé sur la face arrière du bord supérieur 3A du panneau extérieur 3, servant à le rigidifier. Dans ce cas, le bord supérieur 3A, complété du raidisseur 3B, est chaussé par le profilé d'étanchéité 9. Ce profilé 9 comprend un corps 11 formant une fente 13, ladite fente 13 comprenant deux faces opposées, une face interne 15 située du côté d'une lèvre 19 en appui contre la vitre 5 et une face externe 17 opposée à ladite face interne 15. La face interne 15 est formée sur une paroi 16 du corps 11, la paroi 16 comprenant une extrémité supérieure 16A au-dessus de laquelle est située la lèvre 19, et une extrémité inférieure 16B.

La face externe 17 de la fente 13 est formée sur une paroi 18 du corps 11, la paroi 18 comprenant une extrémité supérieure 18A et une extrémité inférieure 18B. Depuis l'extrémité inférieure 18B s'étendent deux lèvres inférieures 21 qui prennent appui sur le panneau extérieur 3 de la porte, et une baguette externe 23. Cette baguette 23 recouvre intégralement et longitudinalement le profilé 9, et a vocation à améliorer l'esthétique dudit profilé 9. L'extrémité supérieure de cette baguette 23 se termine en un crochet qui se positionne entre la lèvre 19 et l'extrémité supérieure 18A de la paroi 18 formant la face externe 17.

Les faces interne et externe (15, 17) comprennent en outre des arêtes 25 positionnées transversalement à l'axe longitudinal du profilé 9. Les arêtes 25 peuvent correspondre à des godrons. Chaque arête 25 a une face d'extrémité extérieure 25A faisant un angle moyen α ou β compris entre 10 et 30° par rapport à la direction longitudinale de la fente 13, ladite face d'extrémité extérieure 25A permettant, de par son inclinaison, de faciliter le montage tout en limitant le risque d'arrachage de l'arête 25 du profilé 9. Ces arêtes 25 ont avantageusement une section transversale en forme de demi-cercle et sont réparties de façon homogène le long du profilé 9.

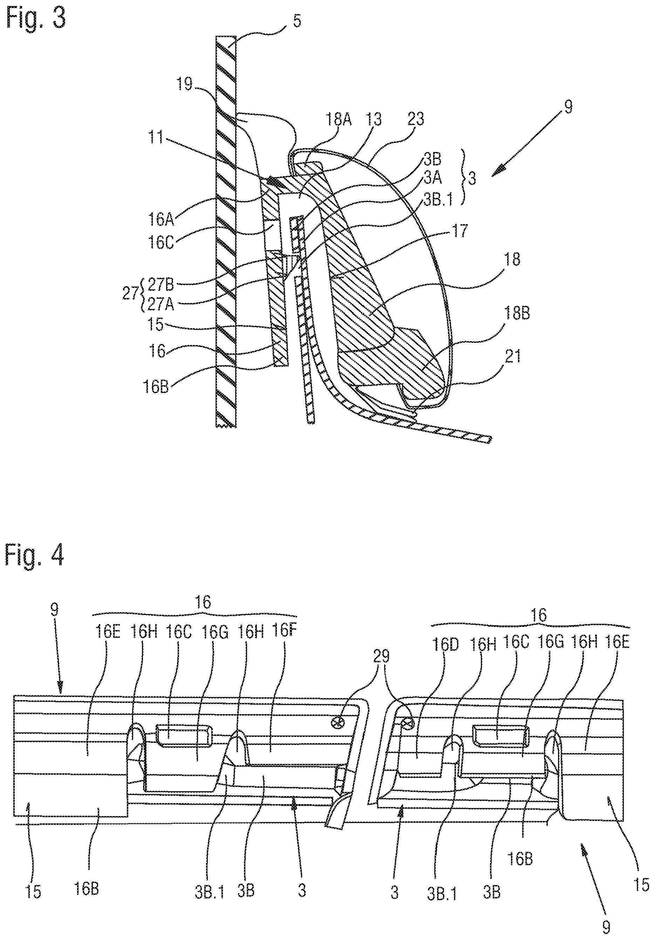

La figure 3 est une autre vue en coupe transversale du profilé au niveau d'un bossage. Le bossage 27 est positionné sur la face interne 15 dans le sens longitudinal du profilé 9. Ce bossage 27 a une section triangulaire avec une face inclinée de glissement 27A le long du bord supérieur 3A et une face de retenue 27B par rapport à un orifice 3B.1 du raidisseur 3B. Ce bossage 27 permet d'améliorer le maintien du profilé 9 sur le panneau 3. Au-dessus du bossage 27 et dans la paroi 16 de la face interne 15 se trouve un ajour 16C, ledit ajour 16C ayant vocation à améliorer la souplesse de la paroi 16. Ainsi, le bossage 27 est contigu au rebord inférieur dudit ajour 16C.

La figure 4 montre une vue arrière de deux profilés montés sur les panneaux extérieurs des portes de la figure 1. Sur cette vue, on peut voir des parties des profilés 9 des portes avant et arrière. La paroi 16 formant la face interne 15 est alors subdivisée en des portions avant 16D, centrale 16E et arrière 16F, lesdites portions (16D, 16E, 16F) étant séparées par des clips 16G. Les portions (16D, 16E, 16F) et les clips 16G sont formés grâce à la présence d'échancrures 16H, lesdites échancrures 16H s'étendant depuis un bord extérieur de la paroi 16 de la face interne 15 de la fente jusqu'à une distance du fond de la fente comprise entre 0 et 10mm, plus préférentiellement entre 0 et 5mm. L'augmentation de la profondeur des échancrures 16H permet également, en améliorant la souplesse du profilé 9, de faciliter son insertion sur le panneau extérieur 3 de la porte. Chaque clip 16G comprend en outre l'ajour 16C, tel que décrit à la figure 3. Cet ajour 16C présente un axe longitudinal préférentiellement aligné avec les fonds des échancrures 16H. Les clips 16G sont préférentiellement adjacents aux extrémités latérales du profilé 9, et plus préférentiellement positionnés dans le premier quart depuis les extrémités latérales dudit profilé 9. Les clips 16G ont une hauteur réduite de la paroi 16 pouvant être inférieure à 80% et /ou supérieure à 50% de la hauteur maximale de la paroi 16. Le profilé 9 comprend en outre des éléments de fixation 29, pouvant notamment être des vis, positionnés aux extrémités latérales dudit profilé 9.

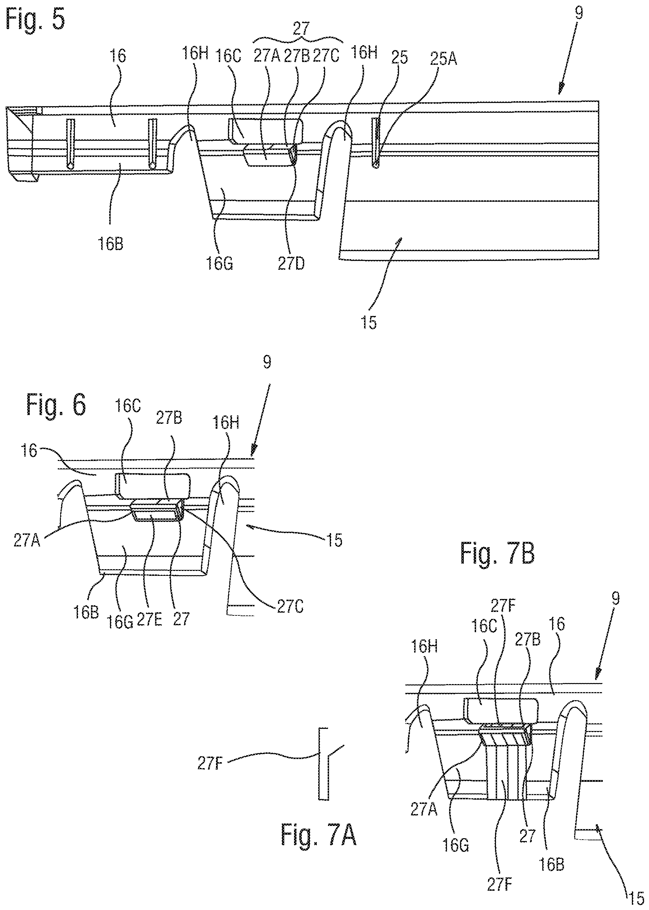

La figure 5 est une vue en coupe longitudinale du profilé, montrant la face interne de la fente du profilé. Le bossage 27 est situé sur le clip 16G, et en-dessous de l'ajour 16C. Le bossage 27 comprend en outre deux faces d'extrémité 27C qui forment des bords 27D avec la face inclinée de glissement 27A, au moins un des bords 27D formant un chanfrein d'au moins 2 x 2mm. Les arêtes 25 sont plus préférentiellement retrouvées sur la paroi 16 formant la face interne 15, au niveau des portions centrales, avant et arrière et/ou sur la face externe de la fente. Préférentiellement, ces arêtes 25 sont au moins au nombre de deux, positionnées respectivement sur la portion avant ou arrière et sur la portion centrale, et plus préférentiellement positionnées longitudinalement à moins de 10cm de l'échancrure 16H séparant la portion respective du clip 16G.

La figure 6 est une vue de la face interne du profilé avec le bossage comprenant une pièce métallique selon une première variante de réalisation de l'invention. La pièce métallique (27E, 27F) est, dans cette variante, un insert métallique 27E intégré lors du moulage du profilé 9. Il est sur la face inclinée de glissement 27A du bossage 27. Cet insert 27E a vocation à diminuer l'accroche du bossage 27 sur le panneau extérieur de la porte, et plus particulièrement l'accroche de la face inclinée de glissement 27A sur le bord supérieur dudit panneau.

Les figures 7A et 7B montrent une seconde variante de réalisation de l'invention où la face inclinée de glissement du bossage est réalisée par une agrafe. Une section transversale de ladite agrafe est illustrée à la figure 7A et son montage sur le bossage est illustré à la figure 7B. L'agrafe 27F est préférentiellement de faible épaisseur, et est fixée sur le profilé 9 depuis l'extrémité inférieure16B de la paroi 16 du clip 16G. L'agrafe 27F s'étend sur la face interne 15 jusqu'à la face inclinée de glissement 27A. Elle s'étend à l'arrière de la paroi 16 de la face interne 15 jusqu'à la face de retenue 27B du bossage 27.

Le montage du profilé 9 peut comprendre une première phase d'orientation à environ 30° du profilé 9 par rapport au bord supérieur 3A du panneau extérieur 3. Une surface de fermeture de la fente 13 (non visible sur les figures), située à une extrémité dudit profilé 9, est positionnée en butée contre une butée respective du panneau extérieur 3 de la porte 1. Le profilé 9 est ensuite déroulé sur le bord supérieur 3A du panneau 3.

Préférentiellement, le profilé est fabriqué dans des matériaux thermoplastiques, la baguette externe pouvant être réalisée dans des matériaux différents du profilé lui-même, tel que du chrome. Le profilé est préférentiellement fabriqué par moulage, mais peut être produit par d'autres techniques connues de l'homme du métier. Le raidisseur peut être réalisé par emboutissage, les orifices étant alors préférentiellement découpés avant la fixation du raidisseur à l'arrière du bord supérieur du panneau extérieur de la porte.

## Revendications

1. Profilé d'étanchéité (9) destiné à être monté sur un bord supérieur (3A) d'un panneau extérieur (3) de porte (1) pourvue d'une vitre (5), ledit profilé comprenant :
- un corps (11) formant une fente (13) avec deux faces opposées (15, 17), apte à chausser le bord supérieur (3A) ;
- une lèvre (19) s'étendant le long du corps (11), destinée à contacter la vitre (5) ;
au moins une des deux faces opposées (15, 17) de la fente (13) comprenant des arêtes (25) s'étendant transversalement au profilé (9) et présentant, chacune, une face d'extrémité extérieure (25A) à la fente (13), avec un profil formant un angle moyen (a, β) compris entre 10° et 30° avec une direction principale de ladite fente (13) de manière à favoriser l'insertion du bord (3A) dans la fente (13), une des deux faces opposées (15, 17) de la fente (13) étant une face interne (15) située du côté de la lèvre (19), ladite face interne (15) comprenant, en outre, au moins un bossage (27) présentant une section triangulaire s'étendant longitudinalement de manière à former une face inclinée de glissement (27A) le long du bord supérieur (3A), le bossage (27) formant un clip apte à engager avec un orifice (3B.1) correspondant dans le bord supérieur (3A), ledit profilé d'étanchéité (9) étant **caractérisé en ce que** la portion du corps (11) formant la face interne (15) de la fente (13) est une paroi (16) avec des échancrures transversales (16H) de part et d'autre de chaque bossage (27) de manière à permettre une flexion de ladite paroi (16) au niveau de ladite face interne (15) entre lesdites échancrures (16H) lors de la mise en place du profilé (9) sur le bord supérieur (3A).

2. Profilé d'étanchéité (9) selon la revendication 1, **caractérisé en ce que** les arêtes (25) présentent, chacune, une section transversale en forme de demi-cercle et sont réparties de manière homogène le long du profilé (9).

3. Profilé d'étanchéité (9) selon l'une des revendication 1 et 2, **caractérisé en ce que** le ou chacun des bossages (27) comprend, en outre une face de retenue (27B) avec l'orifice (3B.1) correspondant du bord supérieur (3A), et deux faces d'extrémité (27C), la face inclinée de glissement (27A) formant avec lesdites faces d'extrémités (27C) deux bords (27D), au moins un desdits bords (27D) présentant un chanfrein d'au moins 2 x 2mm.

4. Profilé d'étanchéité (9) selon l'une des revendications 1 ou 3, **caractérisé en ce que** le ou chacun des bossages (27) comprend, sur la face inclinée de glissement (27A), une pièce métallique (27E, 27F) apte à diminuer l'accroche du bossage (27) sur le bord supérieur (3A) lors de la mise en place du profilé (9) sur le bord supérieur (3A).

5. Profilé d'étanchéité (9) selon l'une des revendications 1 à 4, **caractérisé en ce que** les échancrures (16H) s'étendent depuis un bord extérieur de la face interne (15) vers le fond de la fente (13) jusqu'à une distance dudit fond comprise entre 0 et 10mm.

6. Profilé d'étanchéité (9) selon l'une des revendications 1 à 5, **caractérisé en**
**ce que** la paroi (16) formant la face interne (15) de la fente (13) présente au moins un ajour (16C) entre deux échancrures (16H) de part et d'autre du ou d'au moins un des bossages (27).

7. Profilé d'étanchéité (9) selon la revendication 6, **caractérisé en ce que** le ou les ajours (16C) s'étendent longitudinalement en alignement avec les fonds des échancrures (16H).

8. Véhicule automobile comprenant au moins une porte (1), ladite porte (1) comportant :
a. une vitre (5) mobile ;
b. un panneau extérieur (3) ;
c. un profilé d'étanchéité (9) avec la vitre (5) monté sur un bord supérieur (3A) du panneau extérieur (3) ;
**caractérisé en ce que** le profilé d'étanchéité (9) est selon l'une des revendications 1 à 7.

## Patentansprüche

1. Dichtungsprofil (9) zur Montage an einem oberen Rand (3A) einer mit einer Scheibe (5) versehenen Außenplatte (3) einer Tür (1), wobei das Dichtungsprofil Folgendes umfasst:
- einem Körper (11), der einen Schlitz (13) mit zwei gegenüberliegenden Flächen (15, 17) bildet, der geeignet ist, den oberen Rand (3A) zu berühren;
- eine Lippe (19), die sich entlang des Körpers (11) erstreckt, um die Scheibe (5) zu kontaktieren;
Mindestens eine der beiden gegenüberliegenden Seiten (15, 17) des Schlitzes (13) umfasst Kanten (25), die sich quer zum Profil (9) erstrecken und jeweils eine äußere Endfläche (25A) am Schlitz (13) mit einem Profil aufweisen, das einen mittleren Winkel (α, β) zwischen 10° und 30° mit einer Hauptrichtung des Schlitzes (1) bildet 13) zur Förderung des Einführens des Randes (3A) in den Schlitz (13), wobei eine der beiden gegenüberliegenden Seiten (15, 17) des Schlitzes (13) eine an der Lippe (19) angeordnete Innenfläche (15) ist, wobei die Innenfläche (15) ferner mindestens eine Erhebung (27) mit einem dreieckigen Querschnitt aufweist in Längsrichtung, um eine schräge Gleitfläche (27A) entlang der oberen Kante (3A) zu bilden, wobei der Vorsprung (27) einen Clip bildet, der mit einer entsprechenden Öffnung (3B.1) in der oberen Kante (3A) in Eingriff kommen kann, wobei das Dichtungsprofil (9) **dadurch gekennzeichnet ist, dass** der die innere Fläche (15) des Schlitzes bildet 13) ist eine Wand (16) mit Querausschnitten (16H) auf beiden Seiten jedes Vorsprungs (27), um eine Biegung der Wand (16) an der Innenfläche (15) zwischen den Ausschnitten (16H) beim Einsetzen des Profils (9) auf den oberen Rand (3A) zu ermöglichen.

2. Dichtungsprofil (9) nach Anspruch 1, **dadurch gekennzeichnet, dass** die Kanten (25) jeweils einen halbkreisförmigen Querschnitt aufweisen und gleichmäßig entlang des Profils (9) verteilt sind.

3. Dichtungsprofil (9) nach einem der Ansprüche 1 und 2, **dadurch gekennzeichnet, dass** der oder jeder der Vorsprünge (27) ferner eine Haltefläche (27B) mit der entsprechenden Öffnung (3B.1) des oberen Randes (3A) und zwei Endflächen (27C) aufweist, wobei die geneigte Gleitfläche (27A) mit den genannten Flächen zusammenwirkt Enden (27C) und zwei Kanten (27D), wobei mindestens eine der Kanten (27D) eine Abschrägung von mindestens 2 x 2mm aufweist.

4. Dichtungsprofil (9) nach einem der Ansprüche 1 oder 3, **dadurch gekennzeichnet, dass** der oder jeder der Vorsprünge (27) an der Gleitschräge (27A) ein Metallteil (27E, 27F) aufweist, das geeignet ist, das Einhängen des Vorsprungs (27) am oberen Rand (3A) beim Einsetzen des Dichtungsprofils (9) zu verringern (3A) am oberen Rand.

5. Dichtungsprofil (9) nach einem der Ansprüche 1 bis 4, **dadurch gekennzeichnet, dass** sich die Ausschnitte (16H) von einem Außenrand der Innenfläche (15) zum Boden des Schlitzes (13) bis zu einem Abstand von dem Boden zwischen 0 und 10 mm erstrecken.

6. Dichtungsprofil (9) nach einem der Ansprüche 1 bis 5, **dadurch gekennzeichnet, dass** die die Innenseite (15) des Schlitzes (13) bildende Wand (16) mindestens einen Durchbruch (16C) zwischen zwei Ausschnitten (16H) beiderseits des oder wenigstens einen der Ausbuchtungen (27) aufweist.

7. Dichtungsprofil (9) nach Anspruch 6, **dadurch gekennzeichnet, dass** die Durchbrechung(en) (16C) sich in Längsrichtung in Ausrichtung mit den Böden der Ausbrechungen (16H) erstrecken.

8. Kraftfahrzeug mit mindestens einer Tür (1), wobei die Tür (1) umfasst:
a) eine bewegliche Scheibe (5);
b) eine äußere Platte (3);
c) ein Dichtungsprofil (9) mit der an einem oberen Rand (3A) der Außenplatte (3) angebrachten Scheibe (5);
**Dadurch gekennzeichnet, dass** das Dichtungsprofil (9) nach einem der Ansprüche 1 bis 7 ausgebildet ist.

## Claims

1. Waterproofing profile (9) intended to be mounted on a top edge (3A) of an exterior panel (3) of door (1) fitted with a window (5), the said profile comprising:
- a body (11) forming a slit (13) with two opposite faces (15, 17), capable of placing the upper edge (3A);
- a lip (19) extending along the body (11), intended to contact the glass (5);
at least one of the two opposite faces (15, 17) of the slot (13) comprising edges (25) extending horizontally to the profile (9) and each having an outer edge face (25A) at the slot (13), with a medium angle profile (IDM) forming an angle between 10° and 30° with a main direction of the said slot. (13) in such a way as to facilitate the insertion of the edge (3A) in the slot (13), one of the two opposite faces (15, 17) of the slot (13) being an inner face (15) on the side of the lip (19), the said inner face (15), which also includes at least one boss (27) with a triangular section extending lengthwise to form a sloping face (27A) along the top edge (3A), the boss (27) forming a clip suitable for engagement with a corresponding opening (3B.1) in the top edge (3A), the said sealing profile (9) being characterized as the portion of the body (11) forming the inner face (15) of the slit (13) is a wall (16) with cross-section (16H) on either side of each bossing (27) so as to allow a bending of the said wall (16) at the level of the said inner face (15) between the said slit (16H) when placing the profile (9) on the top edge (3H) (A).

2. Waterproofing profile (9) according to Claim 1, **characterized by** the edges (25) having a cross section in the shape of a semi-circle and are evenly distributed along the profile (9).

3. Waterproofing (9) according to one of Claim 1 and 2, **characterized in that** the boss(s) (27) includes, in addition, a retaining face (27B) with the corresponding opening (3B.1) of the upper edge (3A), and two end faces (27C), the inclined sliding face (27A) forming with the said side(s) ends (27C) two edges (27D), at least one of the said edges (27D) with a chamfer of at least 2 x 2mm.

4. Waterproofing (9) according to one of the claims 1 or 3, **characterized in that** the bosses (27) includes, on the sloping face (27A), a metal part (27E, 27F) capable of reducing the hanging of the bossing (27) on the upper edge (3A) when the profile is placed (27E) 9) on the top edge (3A).

5. Waterproofing (9) according to one of the claims 1 to 4, characterized as the scrapes (16H) extend from an outer edge of the inner face (15) towards the bottom of the slot (13) to a distance of the said bottom between 0 and 10mm.

6. Waterproofing profile (9) according to one of the claims 1 to 5, **characterized by** the wall (16) forming the inner face (15) of the slot (13) having at least one day (16C) between two splinters (16H) on either side of or at least one of the bosses (27).

7. Waterproofing profile (9) according to Claim 6, **characterized by** the day(s) (16C) extending lengthwise in alignment with the bottom of the shears (16H).

8. Motor vehicle comprising at least one door (1), the said door (1) having:
a. a moving glass (5);
b. an exterior panel (3);
c. a sealing profile (9) with the glass (5) mounted on a top edge (3A) of the outer panel (3);
**characterized in that** the waterproofing profile (9) is according to one of the claims 1 to 7.
